Europäisches Patentamt

European Patent Office

Office européen des brevets

(19)

(11) **EP 0 571 171 B1**

(12) **EUROPEAN PATENT SPECIFICATION**

(45) Date of publication and mention
of the grant of the patent:
**21.01.1998 Bulletin 1998/04**

(51) Int Cl.⁶: **H04N 7/24**, H04N 7/30

(21) Application number: **93303814.3**

(22) Date of filing: **18.05.1993**

(54) **Video data encoding and decoding method and apparatus**

Methode und Vorrichtung zur Kodierung und Dekodierung von Videodaten

Méthode et dispositif pour codage et décodage de données vidéo

(84) Designated Contracting States:
**DE FR GB**

(30) Priority: **18.05.1992 KR 928362**

(43) Date of publication of application:
**24.11.1993 Bulletin 1993/47**

(73) Proprietor: **SAMSUNG ELECTRONICS CO., LTD.**
**Suwon-city, Kyungki-do 441-373 (KR)**

(72) Inventor: **Jeong, Je-Chang**
**Seocho-gu, Seoul (KR)**

(74) Representative: **Stanley, David William et al**
**APPLEYARD LEES**
**15 Clare Road**
**Halifax West Yorkshire HX1 2HY (GB)**

(56) References cited:
**EP-A- 0 396 360**          **EP-A- 0 526 885**

- **PATENT ABSTRACTS OF JAPAN vol. 16, no. 142 (E-1187) 9 April 1992 & JP-A-40 000 970 (FUJI PHOTO FILM) & US-A-5 229 864 (MORONAGA ET AL.)**
- **PATENT ABSTRACTS OF JAPAN vol. 15, no. 408 (E-1123) 17 October 1991 & JP-A-31 067 962 (FUJITSU LTD.) 19 July 1991 & US-A-5 146 326 (HASEGAWA)**
- **ALTA FREQUENZA, vol.57, no.5, June 1988 pages 273 - 284 L. CARRIOLI ET AL. 'Muligray image compression based on the human eye transfer function'**
- **K.R. RAO , P. YIP 'DISCRETE COSINE TRANSFORM Algorithms , Advantages , Applications' 1990 , ACADEMIC PRESS INC. , SAN DIEGO * page 286 - page 292 ***

**Description**

The present invention relates to the encoding and decoding of digital video data which is divided into blocks each having a predetermined size. Preferred embodiments of the invention address the problem of reducing blocking artifact, that is, a phenomenon of degrading the quality of reproduction pictures, that is generated by dividing each frame of video data into a plurality of blocks and encoding the divided blocks.

Recently, an encoding and decoding system has been used in systems for transmitting and receiving video and audio signals. The encoding and decoding system encodes the video and audio signal into digital data, stores and transmits the digital data, and then decodes the encoded signal so as to reproduce the original signal. Such an encoding system compresses data to be stored and transmitted through a set of encoding processes.

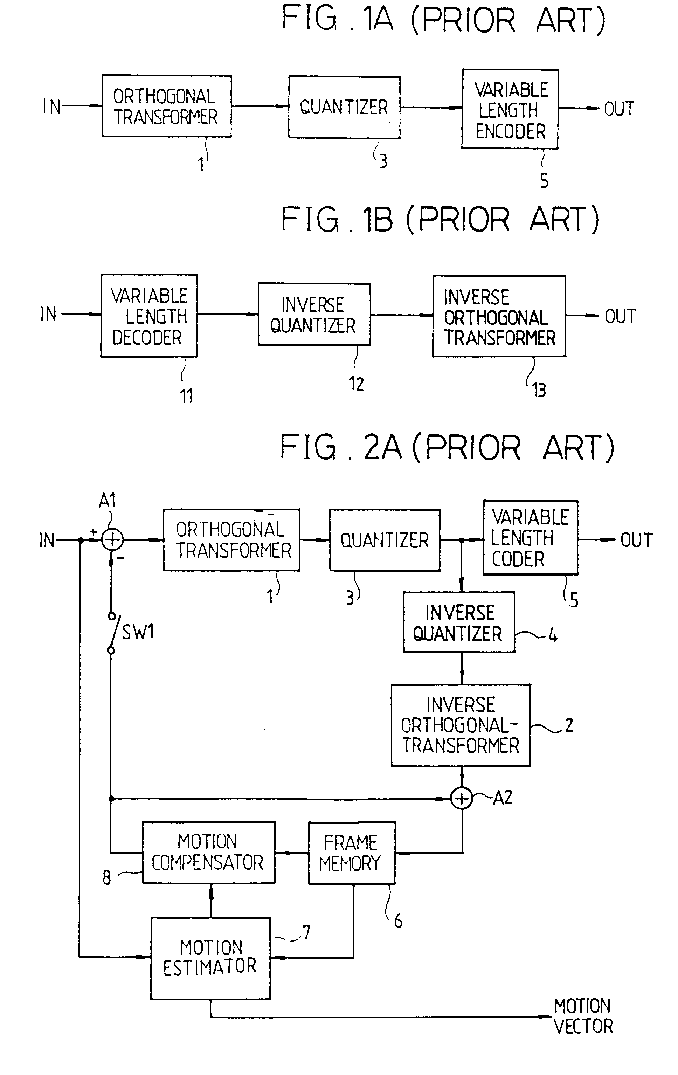

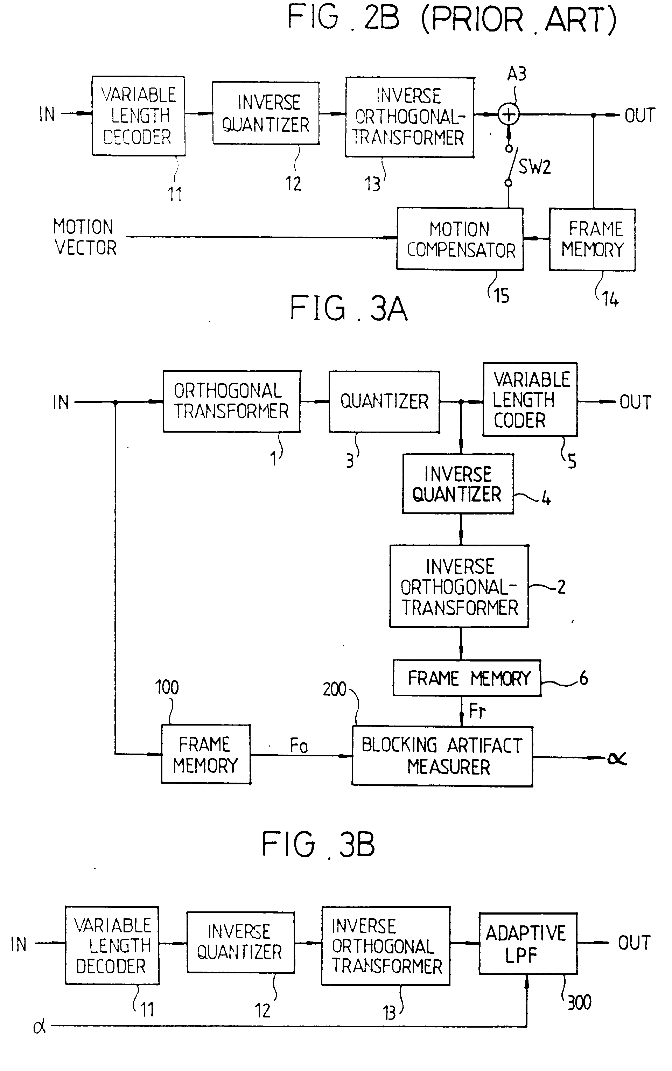

Examples of conventional encoding and decoding systems are illustrated in Figures 1A, 1B, 2A and 2B of the accompanying diagrammatic drawings.

Figure 1A represents a conventional encoding system see EP-A- 0 396 360. Video data of each frame is divided into blocks of NxN (which is generally represented as $N_1 x N_2$, and which, for the convenience of explanation, is assumed as $N_1 = N_2 = N$ which represents a pixel unit) size, and each block data is input to orthogonal transformer 1. Then, orthogonal transformer 1 performs data-transformation of DCT (discrete cosine transform) with respect to each block data. The block data is converted into the transformation coefficients of the frequency domain in orthogonal transformer 1. Then, quantizer 3 changes the conversion coefficients into representative values each of which has a predetermined level, taking the energy distribution of the transformation coefficients into consideration. Variable length encoder 5 further compresses the encoded data by variable-length-encoding the representative values using the statistical characteristics of the representative values.

Such data encoded and compressed in the above encoding system is transmitted to the decoding system shown in Figure 1B. Then, the transmitted data passes through restoring means having variable length decoder 11, inverse quantizer 12 and inverse orthogonal transformer 13, etc and is reproduced into data close to that of the original state before being encoded.

Figures 2A and 2B represent another example of a conventional encoding or decoding system, respectively. Generally, there are many similar portions between a certain picture and its following picture. Thus, in the case of pictures which are slightly moved, if a motion vector is calculated by estimating the motion, and differential-pulse-code-modulation (DPCM) data between the adjacent pictures is encoded during the encoding procedure, the transmission data can be further compressed. Also, when decoding, the motion vector which is calculated in the encoding procedure is used to compensate the block data, thereby reproducing the encoded data. Such an encoding and decoding system which utilizes the motion-compensated DPCM method comprises a predetermined feedback loop for the motion compensation. The feedback loop for the motion compensation in the encoding system shown in Figure 2A comprises inverse quantizer 4, inverse orthogonal transformer 2, adder A2, frame memory 6, motion estimator 7 and motion compensator 8. Also, the decoding system shown in Figure 2B comprises a feedback loop having frame memory 14, motion compensator 15 and adder A3. Since such a DPCM process of an encoding and decoding system is known technology, a detailed description thereof will be omitted. Switches SW1 and SW2 provided in the respectively apparatuses shown in Figures 2A and 2B refresh the video data in unit of a frame or block to prevent accumulation of errors in the DPCM process. That is, when switches SW1 and SW2 are turned on, the DPCM process is performed, and when the switches are turned off, the PCM data is encoded for transmission.

In such a conventional encoding and decoding system, since a single picture is divided into the NxN blocks and then the divided blocks are processed in order to process the video data, if the decoding system receives and reproduces the signal which is encoded and transmitted in the encoding system, the boundaries between blocks of the picture are easily exposed and the blocking artifact in which a certain portion appears to comprise a lattice takes place.

There have been recently proposed several methods to reduce such a blocking artifact. For example, a first method is that the divided blocks in the picture are overlapped with each other; a second method utilizes an overlapped orthogonal transform; and a third method low-pass-filters the data corresponding to the boundaries of the blocks in the decoding system. However, since the first and second methods should change a basic composition of the encoding system, they have problems that complexity of the hardware increases. The third method has a problem which lowers resolution of the boundary portion of the block. Among the above methods, preferred embodiments of the present invention may make use of the third method to solve the above problems.

Preferred embodiments of the present invention aim to provide an encoding system for suppressing a blocking artifact without lowering resolution of the boundary of blocks in which each frame is divided into blocks and a transfer function of a low-pass filter which filters the boundary portion of the blocks is adaptively varied.

It is another aim to provide a decoding system for decoding the video data which is encoded by the encoding system which suppresses the above-mentioned blocking artifact.

According to one aspect of the present invention, there is provided a data encoding method comprising the steps of:

dividing input frame data terminal into predetermined sized blocks;

compressing the data via a data transformation and a quantization process in units of each block;

decompressing and restoring the compressed data in units of a frame; and

measuring a blocking artifact in which the restored frame data is compared with the delayed original frame data to generate a predetermined post-process parameter which represents the blocking artifact degree.

Preferably, said blocking artifact measuring step comprises the step of memorizing the applied frame data in units of a frame.

Preferably, said blocking artifact measuring step comprises the sub-steps of:

calculating error frame data corresponding to the difference between the delayed original frame data and the restored frame data;

calculating a discontinuity degree of the block boundary portion in said error frame data: and

generating a predetermined parameter selected according to the calculated discontinuity degree among the previously set parameters as a post-processing parameter.

Preferably, said discontinuity degree calculation step comprises the sub-steps of:

delaying the error frame data by a predetermined time;

calculating the difference between the delayed error frame data and the original error frame data;

detecting data corresponding to the block boundary among the data obtained in the difference calculation step; and

calculating an average value of the detected data.

Preferably, said post-processing parameter generation step generates a variable parameter between "0" and "1" according to the calculated discontinuity degree.

Preferably, said average value calculation step comprises the sub-step of being reset as a predetermined initial value by a reset signal of a predetermined period of time.

According to another aspect of the present invention, there is provided a data decoding method which decodes an encoded transmission signal using a block transformation, and comprises the steps of:

receiving encoded transmission data and a post-processing parameter which are obtained by an encoding method according to any of the preceding aspects of the invention:

decoding and restoring the transmission data; and

adaptively filtering the decoded and restored data according to the post-process parameter.

Preferably, said filtering step has a low-pass filtering characteristic according to variation of the magnitude of the post-processing parameter.

Preferably, said filtering step has an all-pass filtering characteristic ac cording to variation of the magnitude of the post-processing parameter.

Preferably, said filtering step variably filters the decoded restored signal so that the blocking artifact generated at the block boundary portion is reduced.

According to a further aspect of the present invention, there is provided a data encoding apparatus which divides frame data applied to an input terminal into predetermined sized blocks, and compresses the data via a data transformation and a quantization process in units of each block, so as to suppress a blocking artifact generated at the block boundary portion, said encoding apparatus comprising:

means for delaying the input frame data;

EP 0 571 171 B1

means for decoding the compressed data and outputting the restored frame data; and

a blocking artifact measurer which receives the restored frame data and the applied original frame data, and measures the blocking artifact degree using said two frame data, thereby to generate a predetermined post-processing parameter.

Preferably, said delay means is a frame memory for storing the frame data.
Preferably, said blocking artifact measurer comprises:

a first adder for calculating error frame data corresponding to a difference between the frame data output from said delay means and the restored frame data;

means for receiving the error frame data output from said first adder and calculating a discontinuity degree at the block boundary portion; and

means for receiving the discontinuity degree output from said discontinuity degree calculation means and generating a predetermined post-processing parameter which is varied according to the discontinuity degree.

Preferably, said discontinuity degree calculation means comprises:

a delay means for delaying the output data of said first adder by a predetermined time;

a second adder for calculating a difference between the output data of said first adder and the output data of said delay means;

block boundary detection means for detecting data corresponding to the block boundary portion among the output data of said second adder; and

average error calculation means for calculating an average value of the data which is detected from said block boundary detection means.

Preferably, said post-processing parameter generation means generates a variable post-processing parameter between "0" and "1" according to the discontinuity degree supplied from said discontinuity degree calculation means.
Preferably, said post-processing parameter generation means is a read-only-memory (ROM) for storing a predetermined look-up table which determines a relationship between said discontinuity degree and said post-processing parameter.
Preferably, said block boundary detection means comprises:

a counter for counting an interval corresponding to the block boundary; and

a switch which is turned on or off by the output signal of said counter, and of which one side is connected to said second adder and the other side is connected to said average error calculation means.

Preferably, said average error calculation means is reset as a predetermined initial value by a preset signal of a predetermined period of time.
According to another aspect of the present invention, there is provided a data decoding apparatus which decodes an encoded transmission signal using a block conversion, and comprises:

means for receiving transmission data and a post-processing parameter encoded in an encoding apparatus according to any of the preceding aspects of the invention;

means for decoding and restoring the encoded transmission data; and

means for adaptively filtering the restored data output from said restoring means according to said post-processing parameter.

Preferably, said filtering means operates so as to filter the signal corresponding to the block boundary portion of the restored data supplied from said restoring means.

4

Preferably, said filtering means has filtering characteristics of an all-pass filter function, a low-pass filter function and a mixed filter function of said two filter functions which varies in dependence upon said post-processing parameter.

For a better understanding of the invention, and to show how the same may be carried into effect, reference will now be made, by way of example, to the accompanying diagrammatic drawings, in which:

Figure 3A is a block diagram of one example of an encoder according to an embodiment of the present invention;

Figure 3B is a block diagram of one example of a decoder according to an embodiment of the present invention;

Figure 4A is a block diagram of one example of an encoder according to another embodiment of the present invention;

Figure 4B is a block diagram of one example of a decoder according to another embodiment of the present invention;

Figure 5 is a detailed block diagram of one example of a blocking artifact measurer shown in Figures 3A and 4A; and

Figure 6 is a graph which represents an operational characteristic of the blocking artifact measurer of Figure 5.

In the figures, like reference numerals denote like or corresponding parts.

Figures 3A and 3B respectively show an encoder and a decoder according to one embodiment of the present invention for suppressing a blocking artifact, and which improve the conventional encoder and decoder shown in Figures 1A and 1B. The encoder of Figure 3A is an apparatus for encoding video data, which comprises orthogonal transformer 1 for converting the NxN block data obtained from each divided picture into the transformation coefficients of the frequency domain, quantizer 3 and variable-length-encoder 5 for quantizing and variable-length-encoding the transformation coefficients output from orthogonal transformer 1 and compressing the data, inverse quantizer 4, inverse orthogonal transformer 2 and first frame memory 6 for restoring the quantized data into the video data of special domain and reconstructing frame data, second frame memory 100 for delaying the video data for a predetermined time before being discrete cosine transformed in orthogonal transformer 1, and blocking artifact measurer 200 which receives the delayed original frame data $F_0$ from second frame memory 100, and generates a post-processing parameter $\alpha$ which is varied according to the discontinuity degree of the block boundary portion.

In Figure 3A, operations and functions of orthogonal transformer 1, quantizer 3, variable-length-encoder 5, inverse quantizer 4 and inverse orthogonal transformer 2 are known to a person skilled in the art. Accordingly, detailed descriptions thereof will be omitted. On the other hand, first frame memory 6 receives the restored block data output from NxN inverse orthogonal transformer 2 and sequentially stores the block data to generate the restored frame data $F_r$. Also, second frame memory 100 receives the video data which is applied to input terminal IN and stores it in units of a frame. Then, second frame memory 100 delays the stored frame data $F_0$ for a predetermined time and outputs it so as to be the frame of the same picture as that of the frame data $F_r$ reconstructed and output from first frame memory 6. Then, blocking artifact measurer 200 compares the restored frame data $F_r$ supplied from first frame memory 6 with the delayed original frame data $F_0$ supplied from second frame memory 100, and measures the blocking artifact degree at the block boundary portion, thereby varying and generating post-processing parameter $\alpha$ according to the measured blocking artifact degree. Such a generated post-processing parameter $\alpha$ is transmitted to a decoder along with the encoded video data.

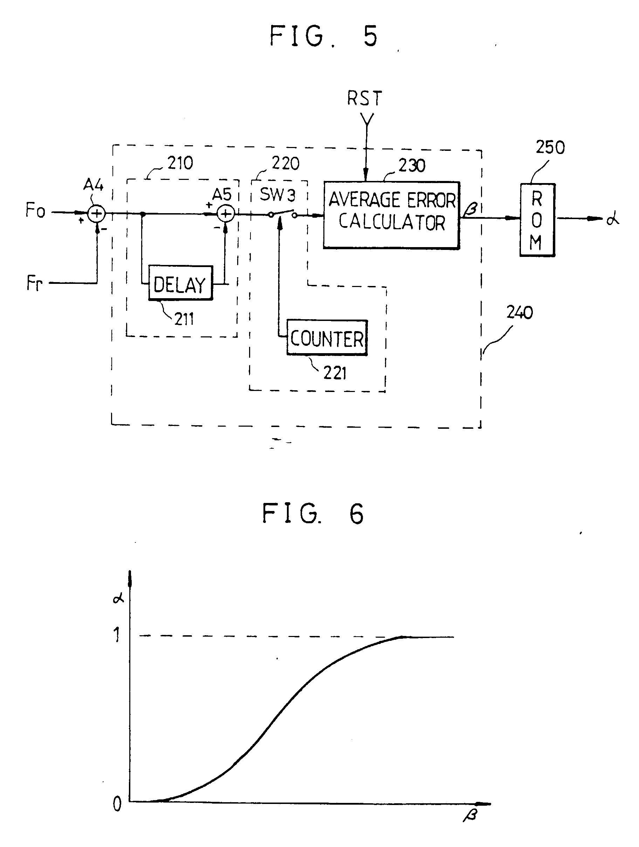

The above blocking artifact measurer will be described in detail with reference to Figure 5.

As shown in Figure 5, blocking artifact measurer 200 comprises fourth adder A4 which receives the delayed original frame data $F_0$ and the restored frame data $F_r$, and generates error frame data corresponding to the difference between both frame data, discontinuity degree calculator 240 which receives the error frame data output from fourth adder A4 and calculates discontinuity degree $\beta$ due to the blocking artifact at the block boundary portion, and read-only-memory (ROM) 250 which receives the calculated discontinuity degree $\beta$ and generates post-processing parameter $\alpha$ which is varied in proportion to the magnitude of the discontinuity degree $\beta$. Here, ROM 250 stores a predetermined look-up table which determines correlation between discontinuity degree $\beta$ and post-processing parameter $\alpha$. The characteristic of the look-up table has a non-linear proportional relationship as shown in Figure 6. Also, the above discontinuity calculator 240 comprises error value calculator 210 which receives error frame data from fourth adder A4 and calculates the error value between the respective pixels from the error frame data, block boundary detector 220 for detecting the error value corresponding to the boundary portion between the respective blocks among the error values calculated in error value calculator 210, and average error calculator 230 which receives the error values detected in block boundary detector 220 and generates the average error value corresponding to discontinuity degree 13 at each block boundary with respect to the entire error frame.

Such a blocking artifact measurer 200 operates as follows. Fourth adder A4 calculates the error frame data using the delayed original frame data $F_0$ and the restored frame data $F_r$. The error frame data output from fourth adder A4 is applied to one input of fifth adder A5. Also, the error frame data is delayed by a predetermined time and applied to the other input of fifth adder A5. Then, fifth adder A5 calculates the difference between both input data. The output of fifth adder A5 corresponds to the error value between the respective pixels at the error frame. The output of fifth adder A5 is supplied to average error calculator 230 via switch SW3. Here, switch SW3 is turned on or off by a control signal supplied from counter 221. The control signal of counter 221 makes switch SW3 turned on, only when the error value output from fifth adder A5 is the data corresponding to each block boundary portion. Thus, only the error value between the respective pixels of each block boundary portion at the error frame is supplied to average error calculator 230. Then, average error calculator 230 calculates an absolute value mean or a root mean square with respect to the error value applied via switch SW3, and calculates an average error value with respect to each error frame data. The calculated average error corresponds to discontinuity degree 13 of each block boundary at each corresponding frame. Then, average error calculator 230 is reset as a predetermined initial value (generally "0") by a predetermined reset signal RST. Here, reset signal RST is applied in units of a frame. However, reset signal RST can be applied in units of a field or a predetermined sized slice, depending upon the system. Discontinuity degree $\beta$ output from average error calculator 230 is supplied to ROM 250. Then, ROM 250 reads out post-processing parameter $\alpha$ corresponding to discontinuity degree $\beta$ from the previously stored look-up table, and generates the read post-processing parameter $\alpha$. Here, post-processing parameter $\alpha$ has a variable real value between "0" and "1" according to the variation of discontinuity degree $\beta$ as shown in Figure 6.

Figure 3B shows a decoder according to one embodiment of the present invention. The decoder comprises adaptive low-pass filter 300 for suppressing the blocking artifact. The decoder apparatus for receiving the encoded transmission data from the encoder apparatus of Figure 3A and restoring the received data comprises variable-length-decoder 11 for variable-length-decoding the received data and converting it into the quantized data, inverse quantizer 12 and inverse orthogonal transformer 13 for inversely quantizing the quantized data, and then converting the inversely quantized data into the video data of the spacial domain, and adaptive low-pass filter 300 of which the filtering characteristic is varied according to post-processing parameter a output and transmitted from blocking artifact measurer 200 of the above-mentioned encoder apparatus. In such a decoder apparatus, the other components except adaptive low-pass filter 300 are known to a person skilled in the art. Accordingly, their detailed descriptions will be omitted.

Here, adaptive low-pass filter 300 filters the restored video data output from inverse orthogonal transformer 13. The filtering characteristic is adaptively varied by post-processing parameter $\alpha$ which is transmitted from the encoder apparatus. Filtering characteristic H of adaptive low-pass filter 300 is as follows in which the filtering band is varied according to post-processing parameter $\alpha$.

$$H = \alpha \cdot L + (1 - \alpha) \cdot A \qquad (1)$$

$$L = \begin{pmatrix} 1 & 2 & 1 \\ 2 & 4 & 2 \\ 1 & 2 & 1 \end{pmatrix} \quad \ldots\ldots\ldots\ldots\ldots\ldots\ldots\ldots\ldots\ldots\ldots\ldots \quad (2)$$

$$A = \begin{pmatrix} 0 & 0 & 0 \\ 0 & 1 & 0 \\ 0 & 0 & 0 \end{pmatrix} \quad \ldots\ldots\ldots\ldots\ldots\ldots\ldots\ldots\ldots\ldots\ldots\ldots \quad (3)$$

Here, L is a low-pass filter coefficient, and A is an all-pass filter coefficient. The equations (2) and (3) represent both the coefficients, respectively. When post-processing parameter $\alpha$ output from the blocking artifact measurer 200 is "0," there is no blocking artifact of the block boundary portion at the frame of the video data output from inverse orthogonal transformer 13. In this case, adaptive low-pass filter 300 becomes the all-pass filter to pass all the input video data. On the other hand, when post-processing parameter $\alpha$ is "1", the blocking artifact is severe at the block boundary portion of the corresponding frame. In this case, adaptive low-pass filter 300 becomes the low-pass filter and filters the block boundary portion of the input video data, thereby eradicating the blocking artifact component which exists in the block boundary portion. On the other hand, when post-processing parameter $\alpha$ is "0<a<1," adaptive low-pass filter 300 has an intermediate characteristic between the all-pass filter and the low-pass filter, and its filtering band is varied according to the blocking artifact degree of the block boundary portion.

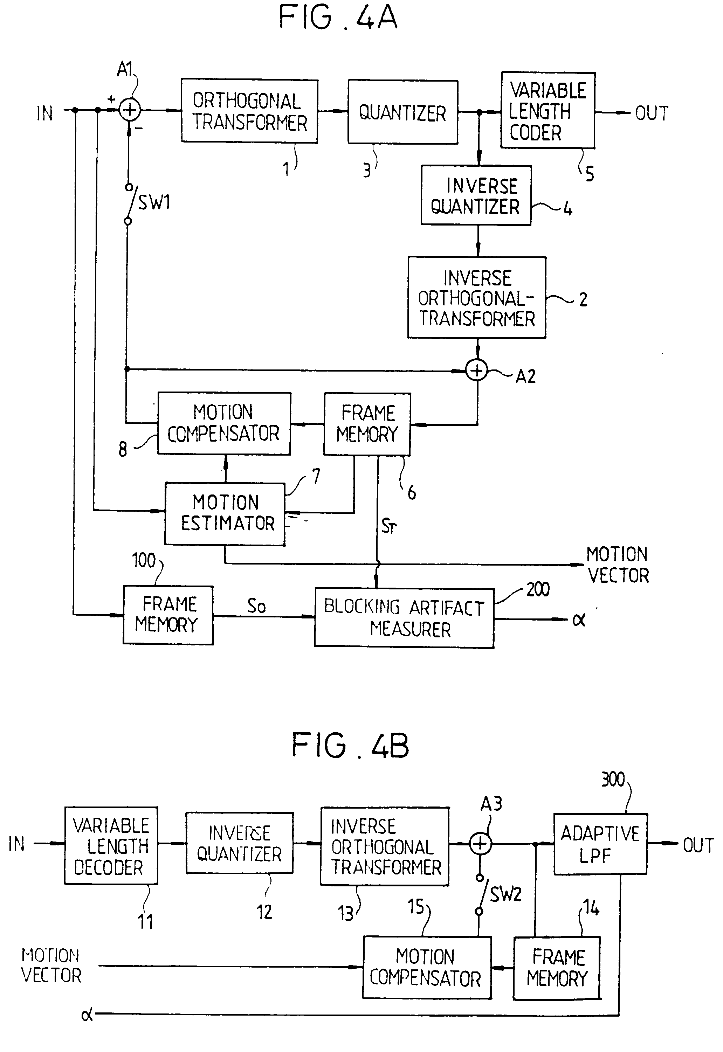

Figures 4A and 4B show an encoder and a decoder according to another embodiment of the present invention respectively, and which improve the conventional encoder and decoder shown in Figures 2A and 2B. The apparatus of Figure 4A is obtained by combining the aforesaid blocking artifact measurer with the conventional encoder apparatus having a predetermined feedback loop for performing a DPCM. In the apparatus of Figure 4A, the same elements as those of the apparatus shown in Figure 3A are designated by the same reference symbols. Their detailed descriptions will be omitted. Here, the feedback loop for performing the DPCM comprises frame memory 6, motion estimator 7 and motion compensator 8. Motion estimator 7 receives the NxN block data from the input terminal IN, and estimates between the input block data and the block data having the most similar pattern to the input block data among the frame data stored in frame memory 6, thereby generating a motion vector MV. Motion compensator 8 extracts the corresponding block from the frame data stored in frame memory 6 according to the motion vector supplied from the motion estimator 7 and supplies the extracted block data to first adder A1 and second adder A2. First adder Al calculates the difference between the block data applied via input terminal IN and the block data supplied from motion compensator 8. The error data is encoded and transmitted. Also, second adder A2 adds the block data supplied from motion compensator 8 to the restored error data supplied from inverse orthogonal transformer 2, so as to supply the result to frame memory 6. The blocking artifact measurer 200 of Figure 4A includes the same elements as those shown in Figure 5. Accordingly, its operation is identically performed as described above.

The decoder apparatus of Figure 4B decodes the signal encoded in the encoder apparatus of FIG4A. In the Figure 4B decoder apparatus, the same elements as those of the apparatus of Figure 3B are designated by the same reference symbols.

When the received transmission data is DPCM data, the feedback loop for restoring the DPCM data comprises frame memory 14 and motion compensator 15. Motion compensator 15 receives motion vector MV transmitted from the encoder apparatus and extracts the corresponding block data among the frame data stored in frame memory 14, to supply the extracted data to third adder A3. Then, third adder A3 adds the output data of inverse orthogonal transformer 13 to the output data of motion compensator 15. Then, adaptive low-pass filter 300 receives post-processing parameter $\alpha$ which is output and transmitted from blocking artifact measurer 200 of the encoder apparatus, and adaptively filters the video data supplied from third adder A3 according to the parameter $\alpha$, thereby reducing the blocking artifact of the block boundary portion. The operational characteristic of adaptive low-pass filter 300 is the same as that described above. Accordingly, adaptive low-pass filter 300 functions as the all-pass filter when post-processing parameter $\alpha$ is "0" while it functions as the low-pass filter when the parameter $\alpha$ is "0." Also, when the parameter $\alpha$ is between "0" and "1", the filtering characteristic is varied according to the magnitude of the parameter $\alpha$.

In the aforementioned embodiment, the discontinuity degree of the block boundary is calculated using the error frame data corresponding to the difference between the delayed original frame data $F_0$ and the restored frame data $F_r$. However, in the actual application, since the discontinuity degree of the block boundary portion of the delayed original frame is very small, the discontinuity degree of the block boundary can be directly calculated using only the restored frame data without using the error frame data, thereby to obtain a sufficient effect in reducing the blocking artifact. In this case, the composition of the system becomes somewhat simplified.

To calculate the discontinuity degree of the block boundary, the left, right, up and down discontinuity degrees between the blocks are measured and the measured values are added. However, to obtain the upward and downward discontinuity degree of the block boundary, since a number of delay devices are needed, the composition becomes complicated in hardware. Thus, assuming that the upward and downward and the left and right blocking artifact degrees are nearly similar to each other, even if only the left and right discontinuity degree of the block boundary is measured, a sufficient effect is obtained.

Also, rather than measure the discontinuity degree of all the block boundaries, the discontinuity degree with respect to several samples taken from the picture can be measured.

Particular embodiments of the present invention have been described above. However, a variety of modifications and applications will be apparent to a person skilled in the art. For example, even if the aforementioned embodiment includes the variable-length-encoder and the variable-length-decoder, since the variable-length-encoding and variable-length-decoding process does not lose the data during the data process differently from the quantizing process, embodiments of the present invention can be also applied to a system excluding the variable-length-encoder and the variable-length-decoder. Also, even if the data which is processed in the encoding system is not two-dimensional data as described in the aforementioned embodiment, but one-dimensional or more than three-dimensional data, embodiments of the present invention can be applied in an encoding and decoding system which utilizes block conversion. The above descriptions will be included in the scope of the following claims.

**Claims**

1. A data encoding method comprising the steps of:

    dividing input frame data terminal into predetermined sized blocks;

    compressing the data via a data transformation and a quantization process in units of each block;

    decompressing and restoring the compressed data in units of a frame; and

    measuring a blocking artifact in which the restored frame data is compared with the delayed original frame data to generate a predetermined post-process parameter which represents the blocking artifact degree.

2. A method according to claim 1, wherein said blocking artifact measuring step comprises the step of memorizing the applied frame data in units of a frame.

3. A method according to claim 1 or 2, wherein said blocking artifact measuring step comprises the sub-steps of:

    calculating error frame data corresponding to the difference between the delayed original frame data and the restored frame data;

    calculating a discontinuity degree of the block boundary portion in said error frame data: and

    generating a predetermined parameter selected according to the calculated discontinuity degree among the previously set parameters as a post-processing parameter.

4. A method according to claim 3, wherein said discontinuity degree calculation step comprises the sub-steps of:

    delaying the error frame data by a predetermined time;

    calculating the difference between the delayed error frame data and the original error frame data;

    detecting data corresponding to the block boundary among the data obtained in the difference calculation step; and

    calculating an average value of the detected data.

5. A method according to claim 3 or 4, wherein said post-processing parameter generation step generates a variable parameter between "0" and "1" according to the calculated discontinuity degree.

6. A method according to claim 4 or claims 4 and 5, wherein said average value calculation step comprises the sub-step of being reset as a predetermined initial value by a reset signal of a predetermined period of time.

7. A data decoding method which decodes an encoded transmission signal using a block transformation, and comprises the steps of:

    receiving encoded transmission data and a post-processing parameter which are obtained by an encoding method according to any of the preceding claims;

    decoding and restoring the transmission data; and

    adaptively filtering the decoded and restored data according to the post-process parameter.

8. A method according to claim 7, wherein said filtering step has a low-pass filtering characteristic according to variation of the magnitude of the post-processing parameter.

9. A method according to claim 7, wherein said filtering step has an all-pass filtering characteristic ac cording to variation of the magnitude of the post-processing parameter.

10. A method according to claim 7, wherein said filtering step variably filters the decoded restored signal so that the blocking artifact generated at the block boundary portion is reduced.

11. A data encoding apparatus which divides frame data applied to an input terminal into predetermined sized blocks, and compresses the data via a data transformation and a quantization process in units of each block, so as to suppress a blocking artifact generated at the block boundary portion, said encoding apparatus comprising:

means for delaying the input frame data;

means for decoding the compressed data and outputting the restored frame data; and

a blocking artifact measurer which receives the restored frame data and the applied original frame data, and measures the blocking artifact degree using said two frame data, thereby to generate a predetermined post-processing parameter.

12. Apparatus according to claim 11, wherein said delay means is a frame memory for storing the frame data.

13. Apparatus according to claim 11 or 12, wherein said blocking artifact measurer comprises:

a first adder for calculating error frame data corresponding to a difference between the frame data output from said delay means and the restored frame data;

means for receiving the error frame data output from said first adder and calculating a discontinuity degree at the block boundary portion; and

means for receiving the discontinuity degree output from said discontinuity degree calculation means and generating a predetermined post-processing parameter which is varied according to the discontinuity degree.

14. Apparatus according to claim 13, wherein said discontinuity degree calculation means comprises:

a delay means for delaying the output data of said first adder by a predetermined time;

a second adder for calculating a difference between the output data of said first adder and the output data of said delay means;

block boundary detection means for detecting data corresponding to the block boundary portion among the output data of said second adder; and

average error calculation means for calculating an average value of the data which is detected from said block boundary detection means.

15. Apparatus according to claim 13 or 14, wherein said post-processing parameter generation means generates a variable post-processing parameter between "0" and "1" according to the discontinuity degree supplied from said discontinuity degree calculation means.

16. Apparatus according to claim 13, 14 or 15, wherein said post-processing parameter generation means is a read-only-memory (ROM) for storing a predetermined look-up table which determines a relationship between said discontinuity degree and said post-processing parameter.

17. Apparatus according to claim 14 or claims 15 or 16 as appendant thereto, wherein said block boundary detection means comprises:

a counter for counting an interval corresponding to the block boundary; and

a switch which is turned on or off by the output signal of said counter, and of which one side is connected to said second adder and the other side is connected to said average error calculation means.

18. Apparatus according to claim 14 or to claim 15, 16 or 17 as appendant thereto, wherein said average error calculation means is reset as a predetermined initial value by a preset signal of a predetermined period of time.

19. A data decoding apparatus which decodes an encoded transmission signal using a block conversion, and comprises:

means for receiving transmission data and a post-processing parameter encoded in an encoding apparatus according to any of claims 11 to 18;

means for decoding and restoring the encoded transmission data; and

means for adaptively filtering the restored data output from said restoring means according to said post-processing parameter.

20. Decoding apparatus according to claim 19, wherein said filtering means operates so as to filter the signal corresponding to the block boundary portion of the restored data supplied from said restoring means.

21. Decoding apparatus according to claim 19 or 20, wherein said filtering means has filtering characteristics of an all-pass filter function, a low-pass filter function and a mixed filter function of said two filter functions which varies in dependence upon said post-processing parameter.


**Patentansprüche**

1. Ein Datencodierverfahren, umfassend die Schritte:

Teilen von eingegebenen Rahmen- bzw. Bilddaten in Blöcke mit vorbestimmten Größen;

Komprimieren der Daten mittels eines Datentransformations- und Quantisierungsschritts in Einheiten eines jeden Blocks;

Dekomprimieren und Umspeichern der komprimierten Daten in Einheiten eines Rahmens; und

Messen eines Blockbildungsartefakts, wobei die umgespeicherten Rahmendaten mit den verzögerten Originalrahmendaten verglichen werden, so daß ein vorbestimmter Nachverarbeitungsparameter erzeugt wird, der den Grad des Blockbildungsartefakts repräsentiert.

2. Ein Verfahren nach Anspruch 1, in welchem der Blockbildungsartefakt-Meßschritt den Schritt eines Speicherns der eingegebenen Rahmendaten in Einheiten eines Rahmens umfaßt.

3. Ein Verfahren nach Anspruch 1 oder 2, in welchem der Blockbildungsartefakt-Meßschritt die Unterschritte aufweist:

Berechnen von Fehlerrahmendaten, die der Differenz zwischen den verzögerten Originalrahmendaten und den umgespeicherten Rahmendaten entsprechen;

Berechnen eines Diskontinuitätsgrads des Blockgrenzabschnitts in den Fehlerrahmendaten; und

Erzeugen eines vorbestimmten Parameters, der entsprechend des berechneten Diskontinuitätsgrads aus den zuvor gesetzten Parametern als Nachverarbeitungsparameter ausgewählt wird.

4. Ein Verfahren nach Anspruch 3, in welchem der Diskontinuitätsgrad-Berechnungsschritt die Unterschritte aufweist:

Verzögern der Fehlerrahmendaten um eine vorbestimmte Zeit;

Berechnen der Differenz zwischen den verzögerten Fehlerrahmendaten und den ursprünglichen Fehlerrahmendaten;

Erfassen der der Blockgrenze entsprechenden Daten aus den Daten, die in dem Differenzberechnungschritt erhalten worden sind, und

Berechnen eines Mittelwerts der erfaßten Daten.

5. Ein Verfahren nach Anspruch 3 oder 4, in welchem der Nachverarbeitungsparameter-Erzeugungsschritt entsprechend dem berechneten Diskontinuitätsgrad einen zwischen "0" und "1" variablen Parameter erzeugt.

6. Ein Verfahren nach Anspruch 4 oder Anspruch 4 und 5, in welchem der Mittelwertberechnungsschritt einen Unterschritt eines durch ein Rücksetzsignal einer vorbestimmten Zeitdauer auf einen vorbestimmten Anfangswert Zurückgesetztwerdens umfaßt.

7. Ein Datendecodierverfahren, welches ein codiertes Übertragungssignal unter Verwendung einer Blocktransformation decodiert und die Schritte aufweist:

   Empfangen codierter Übertragungsdaten und eines Nachverarbeitungsparameters, die gemäß eines Codierverfahrens nach einem der vorangegangenen Ansprüche erhalten worden sind;

   Decodieren und Umspeichern der Übertragungsdaten; und

   adaptives Filtern der decodierten und umgespeicherten Daten entsprechend dem Nachverarbeitungsparameter.

8. Ein Verfahren nach Anspruch 7, in welchem der Filterschritt eine Tiefpaßfiltercharakteristik entsprechend der Variation der Größe des Nachverarbeitungsparameters umfaßt.

9. Ein Verfahren nach Anspruch 7, in welchem der Filterschritt eine Allpaßfiltercharakteristik entsprechend der Variation der Größe des Nachverarbeitungsparameters umfaßt.

10. Ein Verfahren nach Anspruch 7, in welchem der Filterschritt das decodierte umgespeicherte Signal variabel filtert, so daß das an dem Blockgrenzabschnitt erzeugte Blockbildungsartefakt verringert wird.

11. Eine Datencodiervorrichtung, die Rahmendaten, die an einen Eingabeanschluß gegeben werden, in Blöcke vorbestimmter Größen teilt, und die Daten mittels eines Datentransformations- und Quantisierungsschritts in Einheiten eines jeden Blocks komprimiert, um so ein Blockbildungsartefakt, das an dem Blockgrenzabschnitt erzeugt wird, zu unterdrücken, wobei die Codiervorrichtung aufweist:

   eine Einrichtung zur Verzögerung der eingegebenen Rahmendaten;

   eine Einrichtung zum Decodieren der komprimierten Daten und zum Ausgeben der umgespeicherten Rahmendaten; und

   eine Blockbildungsartefakt-Meßeinrichtung, welche die umgespeicherten Rahmendaten und die ursprünglich eingegebenen Rahmendaten empfängt und den Blockbildungsartefaktgrad unter Verwendung der zwei Rahmendatensätze mißt, wodurch ein vorbestimmter Nachverarbeitungsparameter erzeugt wird.

12. Vorrichtung nach Anspruch 11, in welcher die Verzögerungseinrichtung einen Rahmenspeicher zum Speichern der Rahmendaten ist.

13. Vorrichtung nach Anspruch 11 oder 12, in welcher die Blockbildungsartefakt-Meß-einrichtung aufweist:

   einen ersten Addierer zum Berechnen von Fehlerrahmendaten, die einem Unterschied zwischen den von der Verzögerungseinrichtung ausgegebenen Rahmendaten und den umgespeicherten Rahmendaten entsprechen;

   eine Einrichtung zum Empfangen der Fehlerrahmendaten, die von dem ersten Addierer ausgegeben worden sind, und zum Berechnen eines Diskontinuitätsgrads an dem Blockgrenzabschnitt; und

   eine Einrichtung zum Empfangen des von der Diskontinuitätsgrad-Berechnungseinrichtung ausgegebenen Diskontinuitätsgrads und zum Erzeugen eines vorbestimmten Nachverarbeitungsparameters, der entsprechend des Diskontinuitätsgrads variiert wird.

**14.** Vorrichtung nach Anspruch 13, in welcher die Diskontinuitätsgrad-Berechnungseinrichtung aufweist:

eine Verzögerungsschaltung zum Verzögern der Ausgabedaten des ersten Addierers um eine vorbestimmte Zeit;

einen zweiten Addierer zum Berechnen einer Differenz zwischen den Ausgabedaten des ersten Addierers und den Ausgabedaten der Verzögerungseinrichtung;

eine Blockgrenzendetektionseinrichtung zum Erfassen der Daten, die dem Blockgrenzabschnitt entsprechen, aus den Ausgabedaten des zweiten Addierers; und

eine Fehlermittelwert-Berechnungseinrichtung zum Berechnen eines Mittelwerts der Daten, die von der Blockgrenzendetektionseinrichtung erfaßt worden sind.

**15.** Vorrichtung nach Anspruch 13 oder 14, in welcher die Nachverarbeitungsparameter-Erzeugungseinrichtung entsprechend des Diskontinuitätsgrads, der von der Diskontinuitätsgrad-Berechnungseinrichtung geliefert worden ist, einen zwischen "0" und "1" variablen Nachverarbeitungsparameter erzeugt.

**16.** Vorrichtung nach Anspruch 13, 14 oder 15, in welcher die Nachverarbeitungsparameter-Erzeugungseinrichtung ein Lesespeicher (ROM) zum Speichern einer vorbestimmten Nachschlagetabelle ist, die eine Beziehung zwischen dem Diskontinuitätsgrad und dem Nachverarbeitungsparameter bestimmt.

**17.** Vorrichtung nach Anspruch 14 oder Ansprüchen 15 oder 16, wenn darauf zurückbezogen, in welcher die Blockgrenzendetektionseinrichtung aufweist:

einen Zähler zum Zählen eines Intervalls, das der Blockgrenze entspricht; und

einen Schalter, der durch das Ausgangssignal des Zählers an- oder ausgeschaltet wird, und dessen eine Seite mit dem zweiten Addierer verbunden ist und dessen andere Seite mit der Fehlermittelwert-Berechnungseinrichtung verbunden ist.

**18.** Vorrichtung nach Anspruch 14 oder Ansprüchen 15, 16 oder 17, wenn darauf zurückbezogen, in welcher die Fehlermittelwert-Berechnungseinrichtung durch ein Rücksetzsignal von vorbestimmter Zeitdauer auf einen vorbestimmten Anfangswert zurückgesetzt wird.

**19.** Eine Datendecodiervorrichtung, die ein codiertes Übertragungssignal unter Verwendung einer Blockkonvertierung decodiert und aufweist:

eine Einrichtung zum Empfangen von Übertragungsdaten und eines Nachverarbeitungsparameters, die in einer Codiervorrichtung nach einem der Ansprüche 11 bis 18 codiert worden sind;

eine Einrichtung zum Decodieren und Umspeichern der codierten Übertragungsdaten; und

eine Einrichtung zum adaptiven Filtern der von der Umspeicherungseinrichtung ausgegebenen umgespeicherten Daten entsprechend dem Nachverarbeitungsparameter.

**20.** Decodiervorrichtung nach Anspruch 19, in welcher die Filtereinrichtung so arbeitet, daß sie das Signal entsprechend dem Blockgrenzabschnitt der von der Umspeichereinrichtung gelieferten umgespeicherten Daten filtert.

**21.** Decodiervorrichtung nach Anspruch 19 oder 20, in welcher die Filtereinrichtung Filtercharakteristika einer Allpaßfilterfunktion, einer Tiefpaßfilterfunktion und einer gemischten Filterfunktion der beiden Filterfunktionen umfaßt, die in Abhängigkeit von dem Nachverarbeitungsparameter variieren.

**Revendications**

**1.** Procédé de codage de données comprenant les étapes de :

répartition des données d'une image d'entrée sur une borne en blocs de taille prédéterminée;

compression des données par le biais d'un traitement de transformation et de quantification en unités de bloc ;

décompression et restauration des données compressées en unités d'image; et

mesure d'un artefact de groupage dans lequel les données d'image restaurées sont comparées avec les données d'image originales retardées afin de générer un paramètre de post-traitement prédéterminé représentant le degré de l'artefact de groupage.

2. Procédé selon la revendication 1, dans lequel ladite étape de mesure de l'artefact de groupage comprend l'étape de mémorisation des données d'image appliquées en unités d'image.

3. Procédé selon la revendication 1 ou 2, dans lequel ladite étape de mesure de l'artefact de groupage comprend les étapes intermédiaires de :

calcul de données d'image d'écart correspondant à la différence entre les données d'image originales retardées et les données d'image restaurées ;

calcul d'un degré de discontinuité de la partie limitrophe du bloc dans lesdites données d'image d'écart ; et

génération d'un paramètre prédéterminé sélectionné en fonction du degré de discontinuité calculé parmi les paramètres précédemment déterminés en tant que paramètre de post-traitement.

4. Procédé selon la revendication 3, dans lequel ladite étape de calcul de degré de discontinuité comprend les étapes intermédiaires de :

retardement des données d'image d'écart d'une durée prédéterminée ;

calcul de la différence entre les données d'image d'écart retardées et les données d'image d'écart originales ;

détection des données correspondant à la partie limitrophe du bloc parmi les données obtenues lors de l'étape de calcul de différence ; et

calcul d'une valeur moyenne des données détectées.

5. Procédé selon la revendication 3 ou 4, dans lequel ladite étape de génération de paramètre de post-traitement génère un paramètre variant entre "0" et "1" en fonction du degré de discontinuité calculé.

6. Procédé selon la revendication 4 ou les revendications 4 et 5, dans lequel ladite étape de calcul de valeur moyenne comprend l'étape intermédiaire consistant à la réinitialiser à une valeur initiale prédéterminée par un signal de réinitialisation d'une période prédéterminée.

7. Procédé de décodage de données décodant un signal d'émission encodé utilisant une transformation de bloc, et comprenant les étapes de :

réception de données d'émission codées et d'un paramètre de post-traitement obtenus par un procédé de codage conforme à l'une quelconque des revendications précédentes ;

décodage et restauration des données d'émission ; et

filtrage adaptatif des données décodées et restaurées en fonction du paramètre de post-traitement.

8. Procédé selon la revendication 7, dans lequel ladite étape de filtrage présente une caractéristique de filtrage passe-bas en fonction de la variation d'amplitude du paramètre de post-traitement.

9. Procédé selon la revendication 7, dans lequel ladite étape de filtrage présente une caractéristique de filtrage passe-tout en fonction de la variation d'amplitude du paramètre de post-traitement.

10. Procédé selon la revendication 7, dans lequel ladite étape de traitement filtre de manière variable le signal restauré décodé de sorte que l'artefact de groupage généré sur la partie limitrophe du bloc soit réduit.

11. Dispositif de codage de données répartissant les données d'image appliquées à une borne d'entrée en blocs de taille prédéterminée, et compressant les données par le biais d'un traitement de transformation et de quantification de données en unités de bloc, de manière à supprimer un artefact de groupage généré sur la partie limitrophe de bloc, ledit dispositif de codage comprenant :

un moyen de retardement des données d'image en entrée ;

un moyen de décodage des données compressées et de production des données d'image restaurées ; et
un moyen de mesure d'artefact de groupage recevant les données d'image restaurées et les données d'image originales appliquées, et mesurant le degré de l'artefact de groupage en utilisant lesdites données des deux images, ce qui permet de générer un paramètre de post-traitement prédéterminé.

12. Dispositif selon la revendication 11, dans lequel ledit moyen de retardement est une mémoire d'image destinée à stocker les données d'image.

13. Dispositif selon la revendication 11 ou 12, dans lequel ledit moyen de mesure d'artefact de groupage comprend :

un premier additionneur destiné à calculer les données d'image d'écart correspondant à une différence entre les données d'image produites par ledit moyen de retardement et les données d'image restaurées ;
un moyen de réception des données d'image d'écart produites par ledit premier additionneur et de calcul d'un degré de discontinuité sur la limite de bloc ; et
un moyen de réception du degré de discontinuité produit par ledit moyen de calcul de degré de discontinuité et de génération d'un paramètre de post-traitement variant en fonction du degré de discontinuité.

14. Dispositif selon la revendication 13, dans lequel ledit moyen de calcul de degré de discontinuité comprend :

un moyen de retardement destiné à retarder les données émises dudit premier additionneur d'une durée prédéterminée ;
un second additionneur destiné à calculer une différence entre les données émises par ledit premier additionneur et les données émises par ledit moyen de retardement ;
un moyen de détection de limite de bloc destiné à détecter les données correspondant à la partie limitrophe de bloc parmi les données produites par le second additionneur; et
un moyen de calcul d'écart moyen destiné à calculer une valeur moyenne des données qui sont détectées par ledit moyen de détection de limite de bloc.

15. Dispositif selon la revendication 13 ou 14, dans lequel ladite génération de paramètre de post-traitement génère un paramètre de post-traitement variable compris entre "0" et "1" en fonction du degré de discontinuité fourni par ledit moyen de calcul de degré de discontinuité.

16. Dispositif selon la revendication 13, 14 ou 15, dans lequel ledit moyen de génération de paramètre de post-traitement est une mémoire morte (ROM) destinée à stocker une table de données prédéterminée déterminant une relation entre ledit degré de discontinuité et ledit paramètre de post-traitement.

17. Dispositif selon la revendication 14 ou les revendications 15 ou 16 qui y sont liées, dans lequel le dit moyen de détection de limite de bloc comprend :

un compteur destiné à compter un intervalle correspondant à la limite de bloc; et
un commutateur activé ou désactivé par le signal de sortie dudit compteur, et dont un des côtés est connecté audit second additionneur et l'autre côté est connecté audit moyen de calcul d'écart moyen.

18. Dispositif selon la revendication 14 ou selon la revendication 15, 16 ou 17 qui y sont liées, dans lequel ledit moyen de calcul d'écart moyen est réinitialisé à une valeur initiale prédéterminée par un signal de réinitialisation présentant une période prédéterminée.

19. Dispositif de décodage de données décodant un signal d'émission codé en utilisant une conversion de bloc, et comprenant :

un moyen de réception de données émises et un paramètre de post-traitement codé dans un dispositif de codage selon l'une quelconque des revendications 11 à 18 ;
un moyen de décodage et de restauration des données d'émission codées ; et
un moyen de filtrage adaptatif des données restaurées produites par ledit moyen de restauration en fonction dudit paramètre de post-traitement.

20. Dispositif de décodage selon la revendication 19, dans lequel ledit moyen de filtrage fonctionne de manière à filtrer le signal correspondant à la partie limitrophe de bloc des données restaurées produites par ledit moyen de restauration.

21. Dispositif de décodage selon la revendication 19 ou 20, dans lequel ledit moyen de filtrage présente les caractéristiques de filtrage d'une fonction de filtre passe-tout, d'une fonction de filtre passe-bas et d'une fonction de filtre mixte comportant les deux dites fonctions de filtre variant en fonction dudit paramètre de post-traitement.

## FIG.1A (PRIOR ART)

IN → ORTHOGONAL TRANSFORMER → QUANTIZER → VARIABLE LENGTH ENCODER → OUT

1    3    5

## FIG.1B (PRIOR ART)

IN → VARIABLE LENGTH DECODER → INVERSE QUANTIZER → INVERSE ORTHOGONAL TRANSFORMER → OUT

11    12    13

## FIG.2A (PRIOR ART)

16

## FIG . 2B (PRIOR . ART)

## FIG . 3A

## FIG . 3B

# FIG. 4A

IN → (+) A1 → | ORTHOGONAL TRANSFORMER | 1 → | QUANTIZER | 3 → | VARIABLE LENGTH CODER | 5 → OUT

| INVERSE QUANTIZER | 4

| INVERSE ORTHOGONAL-TRANSFORMER | 2

(+) A2

| MOTION COMPENSATOR | 8 ← | FRAME MEMORY | 6

SW1

| MOTION ESTIMATOR | 7

Sr

MOTION VECTOR

| FRAME MEMORY | 100

So → | BLOCKING ARTIFACT MEASURER | 200 → α

# FIG. 4B

IN → | VARIABLE LENGTH DECODER | 11 → | INVERSE QUANTIZER | 12 → | INVERSE ORTHOGONAL TRANSFORMER | 13 → (+) A3 → | ADAPTIVE LPF | 300 → OUT

SW2

MOTION VECTOR → | MOTION COMPENSATOR | 15 ← | FRAME MEMORY | 14

α

# FIG. 5

# FIG. 6